# FASCICULE DE BREVET EUROPEEN

(11) **EP 0 727 392 B1**
(45) Date de publication et mention de la délivrance du brevet: **09.01.2002**
(21) Numéro de dépôt: 96400283.6
(22) Date de dépôt: 12.02.1996
(51) Int. Cl.: C03B 37/012, C03B 37/014

(54) **Procédé de traitement de surface d'une préforme, procédé de réalisation d'une préforme comprenant un tel procédé de traitement de surface, préforme réalisée par la mise en oeuvre de tels procédés**
Verfahren zur Oberflächenbehandlung eines Vorform, Verfahren zum Herstellen eines Vorform mittels genannter Oberflächenbehandlung und durch diese Verfahren hergestellter Vorform
Method for treating the surface of a preform, method for realising a preform using the said method and preform made by the said methods

(30) Priorité: 14.02.1995 FR 9501660
(43) Date de publication de la demande: 21.08.1996
(73) Titulaire: ALCATEL, 75382 Paris Cédex 08 (FR)
(72) Inventeur: Humbert, Patrick, F-75011 Paris (FR); Jameron, Helene, F-75001 Paris (FR); Mazabraud, Pascal, F-93330 Neuilly s/Marne (FR); Rebreyend, Pierre, F-59000 Lille (FR)
(74) Mandataire: Laroche, Danièle

(56) Documents cités:
- EP-A- 0 216 338
- EP-A- 0 440 130
- FR-A- 2 589 461

## Description

L'invention concerne un procédé de traitement de surface d'une préforme pour fibre optique, un procédé de réalisation de préforme pour fibre optique comprenant un tel procédé de traitement de surface, et une préforme réalisée par la mise en oeuvre de ces procédés.

L'invention concerne plus particulièrement un procédé de traitement de surface d'une préforme pour fibre optique fabriquée dans une installation de fabrication ou de recharge de préformes à âme support. L'installation comprenant des moyens de rotation d'axe de rotation horizontal ayant deux points de montage entre lesquels est montée l'âme support de la préforme à fabriquer ou à recharger, des moyens de torche à plasma et d'apport de matière disposés radialement à ladite âme support et ayant un mouvement relatif de translation axiale parallèle à l'âme support pour la réalisation de la préforme autour de ladite âme support. La préforme est fabriquée ou rechargée par passes successives de la torche à plasma avec apport de matière.

Au cours de l'étape ci-dessus, il est généré des suies relatives à une partie de l'apport de matière non agrégée à la préforme. D'une manière connue, les installations sont équipées de hotte aspirante destinée à aspirer ces suies pour éviter qu'elles ne se déposent sur la préforme.

L'étape de fabrication ou de recharge est suivie d'une étape de séparation dans laquelle la préforme est coupée transversalement à l'une de ses extrémités, pour être déposée de l'installation.

Durant cette étape de séparation, on élève la température de la zone de séparation de la préforme à l'aide de la torche à plasma ou d'un chalumeau pour rendre ductile la zone de séparation, puis on étire la zone de séparation ductile jusqu'à la séparation effective de la préforme de son embout.

Outre les suies générées par la matière non agrégée à la préforme, lors des étapes de séparation et de fabrication ou recharge, la surface périphérique de la préforme est chauffée par la torche à plasma à une température telle qu'il existe à proximité de cette surface un phénomène d'évaporation/condensation de la matière constitutive de la préforme. La matière se vaporise, puis en s'élevant elle refroidie et se condense formant des suies retombant sur la préforme.

Ainsi, lors de la dernière passe de l'étape de fabrication ou de recharge, ce phénomène génère des suies qui une fois déposées sur la préforme diminuent sensiblement la qualité de l'état de surface de la préforme. Cela se traduit par une augmentation de la rugosité, et affecte la transparence de la préforme.

De même, lors de l'étape de séparation, le chauffage de la zone de séparation entraîne un dépôt de suies au environ de la zone de séparation.

Pour remédier à ces inconvénients, on opère une étape supplémentaire de vitrification de la préforme à l'aide d'un chalumeau. Cette étape supplémentaire affecte sensiblement le temps de fabrication d'une préforme. En effet cette étape nécessite un refroidissement suffisant de la préforme pour qu'un opérateur puisse venir réaliser la vitrification de la surface avec le chalumeau. Toute diminution de cette phase de refroidissement augmente considérablement les risques d'accident pour l'opérateur. Cependant la réchauffe locale d'une préforme refroidie, lors de l'étape de vitrification de la surface, peut avoir des conséquences importantes sur la préforme dans la zone réchauffée. Il peut notamment s'y produire des fissures. Il faut donc trouver un compromis qualité / sécurité du fait de la présence humaine lors de la phase de vitrification.

Un des buts de la présente invention est donc de proposer un procédé permettant l'élimination de la présence humaine lors du traitement de surface de la préforme, et ainsi de pouvoir supprimer la phase de refroidissement, diminuant ainsi de façon conséquente le temps de fabrication d'une préforme.

A cet effet l'invention concerne un procédé de traitement de surface d'une préforme fabriquée dans une installation de fabrication ou de recharge de préformes à âme support, ladite installation comprenant au moins des moyens de rotation d'axe de rotation horizontal ayant deux points de montage entre lesquels est montée l'âme support de la préforme à fabriquer ou à recharger, des moyens de torche à plasma et d'apport de matière disposés radialement à ladite âme support et ayant un mouvement relatif de translation axiale parallèle à l'âme support pour la réalisation de ladite préforme autour de ladite âme support, ladite préforme étant fabriquée ou rechargée par passes successives de la torche à plasma avec apport de matière. Selon l'invention, à l'issue des passes de la torche à plasma avec apport de matière, on effectue automatiquement et sans refroidissement de la préforme au moins une passe avec une torche à plasma sans apport de matière pour vitrifier des dépôts comprenant des suies de condensation, la torche à plasma étant réglée pour que la température de la surface de la préforme en cours de traitement soit inférieure à la température d'évaporation de la matière constitutive de la préforme et supérieure à la température de vitrification de la matière constitutive de la préforme.

De manière avantageuse, lorsque le procédé de fabrication ou de recharge de la préforme comprend une étape de séparation de la préforme générant un dépôt de suie, on fait, à l'issue de la séparation, au moins une passe avec une torche à plasma sans apport de matière de manière à vitrifier le dépôt résultant.

Selon une caractéristique préférée du procédé, on utilise la même torche à plasma pour les passes avec apport de matière et les passes sans apport de matière.

Avantageusement au moins une passe de la torche à plasma sans apport de matière balaye aussi les dépôts des parties de l'âme support non soumises aux passes de la torche à plasma avec apport de matière.

L'invention à aussi pour objet un procédé de fabrication ou de recharge d'une préforme pour fibre optique comprenant un procédé de traitement de surface de la préforme tel que décrit ci-dessus.

Avantageusement ce procédé de fabrication ou de recharge d'une préforme pour fibre optique comprend :
une étape automatique de fabrication ou de recharge d'une préforme; puis
une étape automatique de séparation de la préforme sans refroidissement intermédiaire; et
une étape de traitement de surface selon le procédé de traitement de surface décrit ci-dessus.

Ce procédé de fabrication ou de recharge d'une préforme pour fibre optique peut en outre comprendre une étape intermédiaire de traitement de surface, selon le procédé de traitement de surface décrit ci-dessus, entre l'étape automatique de fabrication ou de recharge d'une préforme et l'étape automatique de séparation de la préforme sans refroidissement intermédiaire.

Un premier avantage de la présente invention est d'éliminer les opérations manuelles de traitement de surface.

En outre un tel procédé est particulièrement avantageux dans le cas d'une installation du type décrit dans la demande de brevet française FR9413378. En effet dans cette installation, les opérations manuelles de séparation de la préforme ont été automatisées grâce à un dispositif de soutient automatique de la préforme. En conséquence le procédé de traitement de surface selon l'invention associé à une installation de ce type permet une automatisation complète de la fabrication ou de la recharge, de la séparation, et du traitement de surface d'une préforme sans opérations manuelles intermédiaires et donc sans refroidissement intermédiaire de la préforme. Le temps de fabrication et la qualité de la préforme résultante sont donc sensiblement améliorés.

D'autres avantages et caractéristiques de la présente invention résulteront de la description qui va suivre en référence aux dessins annexés dans lesquels :

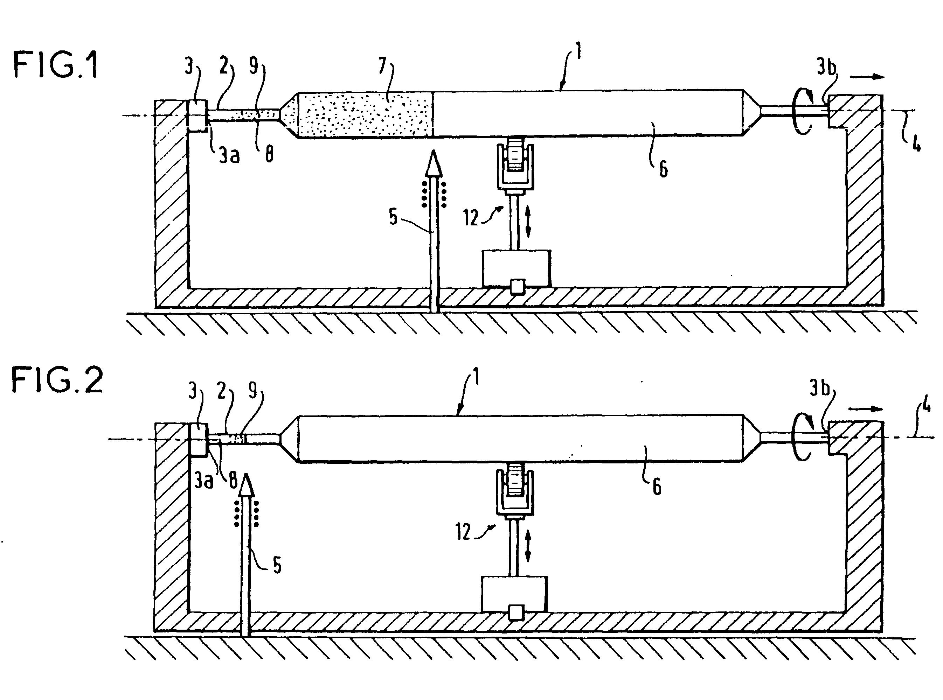

- les figures 1 à 3 sont des représentations schématiques d'une préforme en cours de traitement de surface selon le procédé de l'invention.

Le procédé selon l'invention est destiné à être mis en oeuvre sur une installation de fabrication ou de recharge d'une préforme 1 ayant une âme centrale support 2, connue de l'art antérieur. De façon connue, cette installation comprend au moins des moyens de rotation 3 d'axe de rotation horizontal 4 sur lesquels est montée l'âme support 2 de la préforme 1 à fabriquer ou à recharger, et des moyens de torche à plasma 5 et d'apport de matière disposés radialement à ladite âme support 2. De façon connue, l'installation permet un mouvement relatif de translation axiale des moyens de torche à plasma 5 et d'apport de matière parallèle à l'âme support 2 pour la réalisation de la préforme 1 autour de l'âme support 2.

Dans la forme de réalisation représentée sur les figures, les moyens de rotation 3 sont embarqués sur un châssis mobile en translation parallèlement à l'axe de rotation 4, les moyens de torche à plasma 5 et d'apport de matière étant fixes.

La préforme en cours de fabrication ou de recharge est donc translatée en même temps que le châssis auquel elle est attachée en deux points d'appui qui sont les points de montage 3a, 3b de l'âme support 2 sur les moyens de rotation 3.

La fabrication de la préforme est donc constituée par une pluralité de passes de la préforme en regard des moyens de torche à plasma et d'apport de matière.

Avantageusement mais non limitativement, l'installation peut comporter des moyens de soutien commandés 12 disposés entre les points de montage 3a, 3b et constituant des points d'appui complémentaires de la préforme 1. Ainsi, si l'on choisit judicieusement l'emplacement des moyens de soutien commandés, on peu diminuer la flèche due à la masse de la préforme en cours de fabrication ou en cours de recharge.

Les moyens de soutien commandés et leur fonctionnement sont décrits dans la demande de brevet français n°9413378 de la demanderesse.

Comme représenté sur les figures 1 et 2, à l'issue des passes de fabrication ou de recharge de la préforme il subsiste des dépôts de suies 7, 9, dues au phénomène d'évaporation/condensation, sur la préforme 1 elle-même et sur les parties 8 de l'âme support qui n'ont pas été soumises aux passes de fabrication ou de recharge.

Le procédé de traitement de surface selon l'invention comprend une étape dans laquelle à l'issue des passes de fabrication, on réalise automatiquement et sans refroidissement de la préforme, au moins une passe avec une torche à plasma sans apport de matière. Ainsi, on obtient une préforme présentant un état de surface 6 dépourvu de rugosité importante du fait de la vitrification des dépôts 7, 9 de suies.

Avantageusement on réalise au moins une passe avec une torche à plasma sans apport de matière sur les parties 8 de l'âme 2 de la préforme 1 qui n'ont pas été soumises aux passes de fabrication ou de recharge.

Avantageusement la torche à plasma utilisée pour les passes de fabrication ou de recharge est la même que pour les passes sans apport de matière.

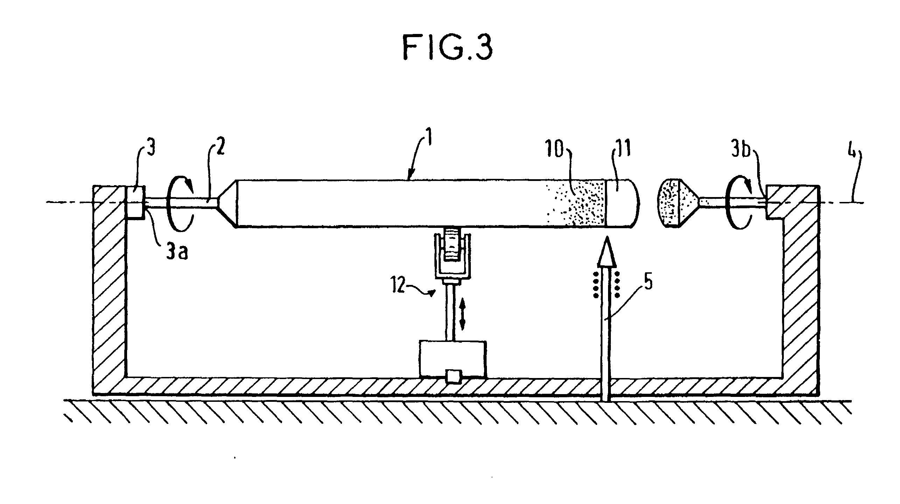

De même que pour l'étape de fabrication ou de recharge, et pour les mêmes raisons, à l'issue de l'étape de séparation, il subsiste un dépôt 10 de suies au moins a proximité de l'extrémité 11 de la préforme (fig. 3). Selon le procédé de traitement de surface de l'invention, à l'issue de la séparation, on fait au moins une passe avec une torche à plasma sans apport de matière de manière à vitrifier le dépôt 10 résultant.

Avec une installation comprenant des éléments de soutien permettant de passer automatiquement et sans refroidissement de l'étape de fabrication ou de recharge de la préforme à l'étape de séparation, il est donc possible de réaliser automatiquement, sans refroidissement et en une seule étape l'ensemble des opérations de fabrication ou de recharge, de séparation, et de traitement de surface. Le procédé résultant est le suivant:
une étape automatique de fabrication ou de recharge d'une préforme; puis
une étape automatique de séparation de la préforme sans refroidissement intermédiaire; et
une étape de traitement de surface selon le procédé de traitement de surface décrit ci-dessus.

Avantageusement, une étape de traitement de surface peut être intercalée entre l'étape automatique de fabrication ou de recharge d'une préforme et l'étape automatique de séparation de la préforme sans refroidissement intermédiaire

Lors des passes de traitement de surface, la torche à plasma est réglée pour chauffer la surface de la préforme à une température de vitrification inférieure à la température de vaporisation de la matière constitutive de la préforme

Un avantage de la présente invention est de permettre de réaliser des préformes ayant un bon état de surface de rugosité de l'ordre de 10 nm.

Un autre avantage de la présente invention est de permettre une automatisation du traitement de surface en plus de l'automatisation de la séparation. Cela génère une automatisation du procédé, donc un gain de productivité et l'élimination de risques pour l'opérateur, et l'élimination des risques de défaut de qualité de la préforme dus au réchauffage de la préforme dans l'art antérieur.

Bien que seule une forme de réalisation ait été décrite, toute modification évidente de l'invention apportée par l'homme du métier doit être comprise dans le cadre de ladite invention.

## Revendications

1. Procédé de traitement de surface d'une préforme (1) fabriquée dans une installation de fabrication ou de recharge de préformes (1) à âme support (2), ladite installation comprenant au moins des moyens de rotation (3) d'axe de rotation horizontal (4) ayant deux points de montage (3a, 3b) entre lesquels est montée l'âme support (2) de la préforme (1) à fabriquer ou à recharger, des moyens de torche à plasma (5) et d'apport de matière disposés radialement à ladite âme support (2) et ayant un mouvement relatif de translation axiale parallèle à l'âme support (2) pour la réalisation de ladite préforme (1) autour de ladite âme support (2), ladite préforme étant fabriquée ou rechargée par passes successives de la torche à plasma avec apport de matière, ledit procédé étant **caractérisé en ce que** à l'issue des passes de la torche à plasma avec apport de matière, on effectue automatiquement et sans refroidissement de la préforme au moins une passe avec une torche à plasma sans apport de matière pour vitrifier des dépôts (7, 9, 10) comprenant des suies de condensation, la torche à plasma étant réglée pour que la température de la surface de la préforme en cours de traitement soit inférieure à la température d'evaporation de la matiere constitutive de la préforme et supérieure à la temperature de vitrification de la matiere constitutive de la préforme.

2. Procédé selon la revendication 1, comprenant une étape de séparation de la préforme générant un dépôt de suie (10), **caractérisé en ce qu'**à l'issue de la séparation, on fait au moins une passe avec une torche à plasma sans apport de matière de manière à vitrifier le dépôt (10) résultant.

3. Procédé selon la revendication 1 ou 2 **caractérisé en ce que** on utilise la même torche à plasma pour les passes avec apport de matière et les passes sans apport de matière.

4. Procédé selon l'une quelconques des revendications 1 à 3 **caractérisé en ce qu'**au moins une passe de la torche à plasma sans apport de matière balaye les dépots (9) des parties (8) de l'âme support (2) non soumises aux passes de la torche à plasma avec apport de matière.

5. Procédé de fabrication ou de recharge d'une préforme pour fibre optique **caractérisé en ce qu'**il comprend au moins une étape de traitement de surface de la préforme selon le procédé de l'une quelconque des revendications 1 à 4.

6. Procédé selon la revendication 5 **caractérisé en ce qu'**il comprend
une étape automatique de fabrication ou de recharge d'une préforme; puis
une étape automatique de séparation de la préforme sans refroidissement intermédiaire; et
l'étape de traitement de surface.

7. Procédé selon la revendication 6 **caractérisé en ce qu'**il comprend une étape intermédiaire de traitement de surface selon le procédé de l'une quelconque des revendications 1 à 4 entre l'étape automatique de recharge d'une préforme et l'étape automatique de séparation de la préforme sans refroidissement intermédiaire.

## Patentansprüche

1. Verfahren zur Behandlung der Oberfläche einer Vorform (1), die in einer Vorrichtung zur Herstellung oder dem Nachladen von Vorformen (1) mit Stützseele (2) hergestellt ist, welche Vorrichtung wenigstens Mittel zur Rotation (3) um die horizontale Rotationsachse (4) mit zwei Montagestellen (3a, 3b) zwischen denen die Stützseele (2) der herzustellenden oder nachzuladenden Vorform (1) montiert ist, und radial zur Stützseele (2) angeordnete und zur Herstellung der Vorform (1) um die Stützseele (2) parallel zur Stützseele (2) in axialer Versetzung relativ bewegbare Mittel zum Plasmabrennen (5) und Zuführen von Material aufweist, wobei die Vorform durch aufeinanderfolgende Durchläufe des Plasmabrenners mit Materialzufuhr hergestellt oder nachgeladen wird, **dadurch gekennzeichnet, dass** nach den Durchläufen des Plasmabrenners mit Materialzufuhr automatisch und ohne Abkühlung der Vorform wenigstens ein Durchlauf mit einem Plasmabrenner ohne Zufuhr von Material erfolgt um die Abscheidungen (7, 9, 10) mit Kondensationsruß zu vergläsern, wobei der Plasmabrenner so eingestellt ist, dass die Oberflächentemperatur der Vorform während der Behandlung unterhalb der Verdampfungstemperatur des die Vorform bildenden Materials und oberhalb der Vergläserungstemperatur des die Vorform bildenden Materials liegt.

2. Verfahren nach Anspruch 1, mit einem Schritt zur Trennung der Vorform bei dem eine Rußabscheidung (10) erzeugt wird, **dadurch gekennzeichnet, dass** nach der Trennung wenigstens ein Durchlauf mit einem Plasmabrenner ohne Materialzufuhr erfolgt, um so die resultierende Abscheidung (10) zu vergläsern.

3. Verfahren nach Anspruch 1 oder 2, **dadurch gekennzeichnet, dass** der gleiche Plasmabrenner für die Durchläufe mit Materialzufuhr und die Durchläufe ohne Materialzufuhr verwendet wird.

4. Verfahren nach einem der Ansprüche 1 bis 3, **dadurch gekennzeichnet, dass** wenigstens ein Durchlauf des Plasmabrenners ohne Materialzufuhr die Abscheidungen (9) der Teile (8) der Stützseele (2), die den Durchläufen des Plasmabrenners mit Materialzufuhr nicht ausgesetzt sind, überstreicht.

5. Verfahren zum Herstellen und Nachladen einer Vorform für eine optische Faser, **dadurch gekennzeichnet, dass** es wenigstens einen Schritt zur Behandlung der Oberfläche der Vorform gemäß dem Verfahren nach einem der Ansprüche 1 bis 4 aufweist.

6. Verfahren nach Anspruch 5, **dadurch gekennzeichnet, dass** es
einen automatischen Schritt zur Herstellen oder Nachladen einer Vorform; dann
einen automatischen Schritt zur Trennung der Vorform ohne Zwischenkühlung; und
den Schritt zur Behandlung der Oberfläche aufweist.

7. Verfahren nach Anspruch 6, **dadurch gekennzeichnet, dass** es einen Zwischenschritt zur Behandlung der Oberfläche gemäß dem Verfahren nach einem der Ansprüche 1 bis 4 zwischen dem automatischen Schritt des Nachladens einer Vorform und dem automatischen Schritt der Trennung der Vorform ohne Zwischenkühlung aufweist.

## Claims

1. A method of performing surface treatment on a preform (1) manufactured in an installation for manufacturing or building up preforms (1) having supporting cores (2), said installation including at least rotation means (3) having a horizontal axis of rotation (4) and two mounting points (3a, 3b) between which the supporting core (2) of the preform (1) to be manufactured or built up is mounted, plasma-torch and material-supply means (5) disposed radially relative to said supporting core (2) and mounted to move in axial translation relative to and parallel to the supporting core (2) so as to make said preform (1) around said supporting core (2), said preform being manufactured or built up by effecting successive passes with the plasma torch while material is being supplied, said method being **characterized in that**, after the plasma torch passes with material being supplied have been effected, at least one pass is effected automatically and without cooling the preform, which pass is effected with a plasma torch and without material being supplied so as vitrify deposits (7, 9, 10) comprising condensation soot, the plasma torch being set so that the temperature of the surface of the preform being treated is lower than the evaporation temperature of the material making up the preform, and is higher than the vitrification temperature of the material making up the preform.

2. A method according to claim 1, including a preform separating step that generates a deposit of soot (10), the method being **characterized in that** after separation has been performed, at least one pass is effected with a plasma torch and without material being supplied so as to vitrify the resulting deposit (10).

3. A method according to claim 1 or 2, **characterized in that** the same plasma torch is used both for the passes effected with material being supplied, and also for the passes effected without material being supplied.

4. A method according to any one of claims 1 to 3, **characterized in that** at least one pass effected with the plasma torch and without material being supplied sweeps over the deposits (9) on those portions (8) of the supporting core (2) which are not subjected to passes effected with the plasma torch while material is being supplied.

5. A method of manufacturing or building up an optical fiber preform, said method being **characterized in that** it includes at least one preform surface treatment step according to the method of any one of claims 1 to 4.

6. A method according to claim 5, **characterized in that** it includes:
an automatic preform manufacturing or building-up step; then
an automatic preform separating step without intermediate cooling; and the surface treatment step.

7. A method according to claim 6, **characterized in that** it includes an intermediate surface treatment step according to the method of any one of claims 1 to 4, between the automatic preform manufacturing or building-up step and the automatic preform separating step without intermediate cooling.
